# EUROPEAN PATENT SPECIFICATION

(11) **EP 1 580 144 B1**
(45) Date of publication and mention of the grant of the patent: **01.08.2007**
(21) Application number: 04007296.9
(22) Date of filing: 26.03.2004
(51) Int. Cl.: B65D 81/00, A47J 31/06, A47J 31/40

(54) **Integrated cartridge for extracting a beverage from a particulate substance**
Integrierte Kapsel zum Extrahieren eines Getränkes
Capsule intégrée pour l'extraction d'une boisson

(43) Date of publication of application: 28.09.2005
(73) Proprietor: ILLYCAFFE' S.p.A., I-34147 Trieste (IT)
(72) Inventor: Suggi Liverani, Furio, 34123 Trieste (IT); Mastropasqua, Luca, 34123 Trieste (IT); Van Eeden,Frans, 20136 Milano (IT); Dellapietra, Bruno, 34013 Duino Aurisina (Prov. of Trieste) (IT)
(74) Representative: Modiano, Micaela Nadia

(56) References cited:
- EP-A- 0 931 490
- US-A- 3 713 377
- US-A1- 2003 056 661

## Description

The present invention relates to an integrated cartridge for extracting a beverage from a particulate substance, such as ground coffee, instant coffee, tea, powdered chocolate or milk, and the like.

It is known that machines for extracting a beverage from a particulate substance usually require that the particulate substance is placed into a filtering receptacle installed in the machine. In particular, automatic/semiautomatic espresso coffee machines comprise a filtering receptacle, also called filter holder, in which a dose of ground coffee is placed before the extraction of coffee beverage takes place.

The general steps for extracting a coffee beverage in an espresso coffee machine, which are substantially equivalent to those of other automatic machines for preparing a beverage starting from a powdered substance, comprise a phase of delivering hot water under suitable pressure into an extraction chamber which includes the filtering receptacle, a brewing phase and a phase of conveying the brewed beverage into an external cup or glass, ready to drink.

Ground coffee, as well as other particulate substances for preparing brewed beverages, is usually a single use substance, in that the organoleptic qualities such as taste, aroma and body of the brewed beverage are irremediably lost once ground coffee has been soaked. Accordingly, in espresso coffee machines and in other brewing machines the particulate substance has to be removed after one single brewing. This is the reason why the filtering receptacle housing a dose of ground coffee is usually manually removable from the espresso coffee machine, in order to allow emptying of the receptacle from the used ground coffee and filling it with a new dose of ground coffee.

In order to facilitate the operations of filling and emptying the filtering receptacle, single serving pre-packaged tablets of ground coffee have been provided, consisting of a dose of ground coffee contained in a filtering paper bag or sachet, to be placed directly in a filter holder of the espresso coffee machine. While this arrangement has resulted handy, it is affected by some drawbacks. In particular, the tablet is not air-tight and accordingly a second air-tight packaging must be provided for enclosing each dose, in order to keep the tablet uncontaminated from the external environment during storage.

Moreover, the user's hands come into contact with the tablet when the tablet is placed on the filter holder so that hygiene requirements are not fully assured.

In the past years, disposable capsules containing ground coffee have been also provided. Such capsules, generally having a frustum shape, are made of plastics or aluminum and provide a better air-tight barrier to the external environment than the filtering paper used in tablets.

A known capsule has a top surface that is pierceable by an injection needle/nozzle of the espresso coffee machine, in order to inject water under pressure inside the capsule, and a bottom surface comprising weakened zones which tear under pressure of percolation fluids. An internal filter is also provided inside the capsule for preventing solid substances from being ejected from the capsule together with the coffee beverage.

Another known capsule comprises a cylindrical body made of polypropylene, with a top and a bottom surface having a plurality of openings for distributing hot water throughout the dose of ground coffee, and comprising a sheet of paper filter for blocking passage of ground coffee outside the openings of the bottom surface during the extraction phase. These capsules have usually to be placed into a further packaging, such as a multilayered plastic sachet.

In order to prepare a coffee beverage, the known capsules and cartridges are placed into the filter holder, that constitutes an extraction chamber for coffee when it is installed on the coffee machine. During the extraction phase, the percolation fluids may come into contact with internal surfaces of the extraction chamber before definitively flowing out into the external coffee cup. Such contact contaminates the extraction chamber as well as the filter holder and after a number of coffee extraction operations the quality of the beverage is greatly reduced, suffering from residuals and contaminants in the extraction chamber.

Accordingly, the extraction assembly, comprising the extraction chamber and the filter holder, has to be accurately cleaned after a certain number of coffee extraction operations; in addition, decalcification must be performed on a regular basis.

Even when such cleaning operations are regularly carried out, the fluid turbulence inside the extraction chamber of the machine or the insufficient fluid-tight seal at the opened top surface of the capsule during water injection causes either the extracted beverage or the injected water to lap portions of the external surface of the capsule itself, thus jeopardizing the extraction hygiene requirements.

Another drawback of known capsules is that they do not retain percolation fluid residuals inside the capsule, in that perforations or openings on the top surface and/or on the bottom surface of the capsules provide for an escape for fluid residuals when the extraction is terminated and/or when the capsule is removed from the machine, causing the capsule to drip and dirt the surroundings of the coffee machine.

In addition, the known capsules and espresso coffee machines do not suffer from a limited hygienic character only, but they are often affected by a not so efficient distribution of hot water into the ground coffee and/or delivery of the coffee beverage.

In fact, in known capsules having a frustum shape, the hot water is injected into the internal volume by means of a nozzle that pierces the top surface, which has a smaller diameter than the bottom surface, so that hot water is sprayed from a single point rather than being evenly showered onto the whole dose of coffee. Accordingly, the hot water washes the coffee particles in an inhomogeneous way.

This drawback has been partially solved by the cartridge disclosed in EP-A-1344722, wherein two discs are provided inside the cartridge having a plurality of openings and a plurality of embossings, in order to create a plurality of fluid channels. Unfortunately, such known cartridge has to be pierced on both the upper and the lower surface in order to extract the beverage, and the internal volume of the cartridge has to be burdened with additional elements such as distribution discs.

Yet another drawback of prior art cartridges is that they are not very handy, in that a user must control the insertion direction when he installs the cartridge into an extraction machine. This control may be facilitated by means of a particular shape of the cartridge's receptacle in the machine, but when the user is particularly hurried (for instance, when the user is a barman assigned to continuously and quickly prepare coffee beverages for many customers) even a control of a minor nature is unacceptable.

Aim of the present invention is to overcome the drawbacks of prior art cartridges and capsules by providing an integrated cartridge by means of which most of the tasks that are conventionally performed by beverage extraction machines are performed by the cartridge itself.

Within the scope of this aim, an object of the present invention is to provide a cartridge and an extraction system that greatly reduce or eliminate contamination of any component of machines for producing a beverage from a particulate substance.

A second particular object of the present invention is to provide a universal beverage extraction system, which takes advantage of its contamination-free structure for allowing consecutive extractions of beverages from different kinds of particulate substances.

Another particular object of the present invention is to guarantee a high level of preservation of the particulate substance inside the cartridge until the cartridge is installed into the beverage extraction machine, reducing contamination of the particulate deriving from the external environment.

Another object is to simplify use of the cartridge, reducing the number of operations to be carried out for preparing the cartridge to installation into a beverage extraction machine.

A further object is to provide an improved even distribution of the injection fluid throughout the entire dose of particulate substance of the cartridge.

Yet another object is to simplify and reduce the internal load of the cartridge and the beverage extraction machine without affecting the quality of the final beverage.

Not least object of the invention is to provide a cartridge and an extraction assembly which speed up the beverage preparation operations.

This aim, these objects and other which will become apparent hereinafter are achieved by a cartridge for extracting a beverage from a particulate substance contained therein by means of water under pressure, the cartridge comprising: a main body comprising a cup portion and a lid portion, the cup portion comprising a base, a sidewall and a rim opposed to the base, the lid portion being fixedly attached to the rim of the cup portion so as to define an internal volume of the cartridge, the internal volume of the cartridge housing the particulate substance comprised within filtering means for retaining the particulate substance and for percolating fluid substances therethrough, the lid portion comprising a normally closed lid port defining a first passage for percolation fluid substances when it is opened, characterized in that it comprises a tappet arranged inside the internal volume so as to pierce the base when a pressure is applied to the base towards the internal volume, thus opening a normally closed cup port.

Further characteristics and advantages of the invention will become better apparent from the following description of preferred but not exclusive embodiments, illustrated by way of non-limitative embodiments in the accompanying drawings, wherein:
Figure 1 is a perspective view of a cartridge according to the invention;
Figure 2 is a perspective cross-sectional view of the cartridge of Figure 1, taken along a radial plane;
Figure 3 is a perspective cross-sectional view, taken along a radial plane, of the cartridge of Figure 1 in a pierced state;
Figure 4 is a perspective view of the tappet assembly housed in the cartridge of Figure 1;
Figure 5 is a broken away view of an extraction assembly according to a further embodiment of the invention, in which the capsule of Figure 1 is installed;
Figure 6 is a broken away view of the extraction assembly of Figure 5 when it is arranged in the beverage extraction position;
Figure 7 is a side cross-sectional view of the injection nozzle used in the extraction assembly of Figure 5.

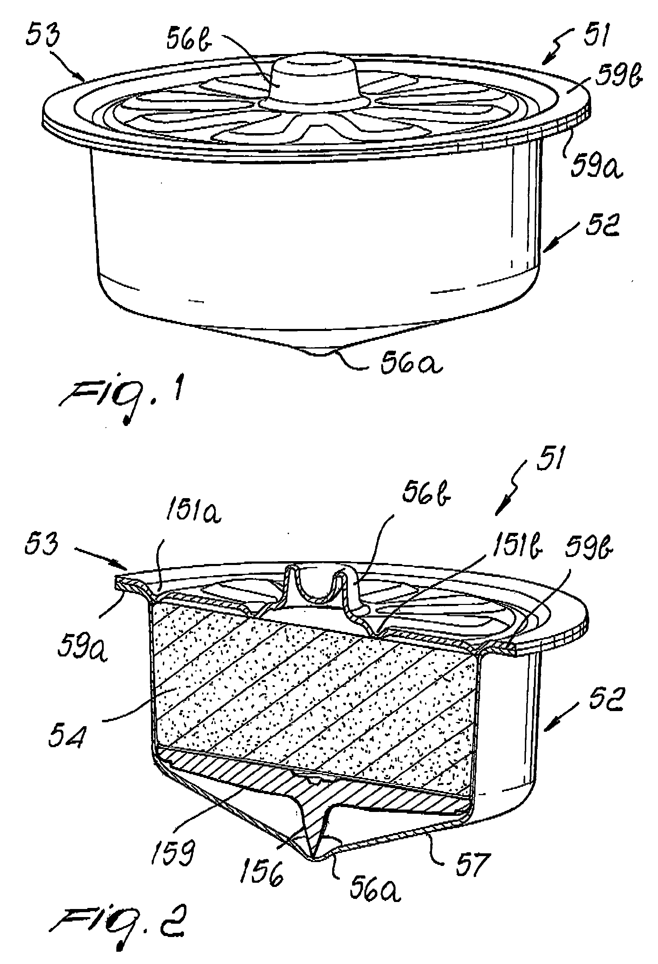

With reference to Figures 1-4 a cartridge or capsule **51** according to an embodiment of the invention comprises a cup portion **52** having a closed base **57** and a peripheral flange **59a** on its mouth. A substantially flat lid portion **53** is fixedly attached to the cup portion **52**, for instance by axially hot welding the peripheral edge **59b** of the lid portion **53** to the flange **59a**. Obviously, any other known joining technique can be provided in the alternative for fixedly attaching the lid portion to the cup portion, such as ultrasonic welding, bonding or combinations of these with forging or deforming techniques.

The lid portion **53** comprises a normally closed lid port **56b** having an M-like cross section and further comprises bulges **151a** and **151b**, for creating a small gap between the lid portion and a dose of ground coffee **54** filling the capsule **51** and sandwiched between filtering means, such as filter paper sheets.

The base **57** and the dose of ground coffee form a substantially conical hollow volume in which a tappet **159** is housed. The tappet is herein defined as a piercing member of a substantially hard material such as plastics having a sort of spike **156** protruding out from a supporting portion **157** of the tappet.

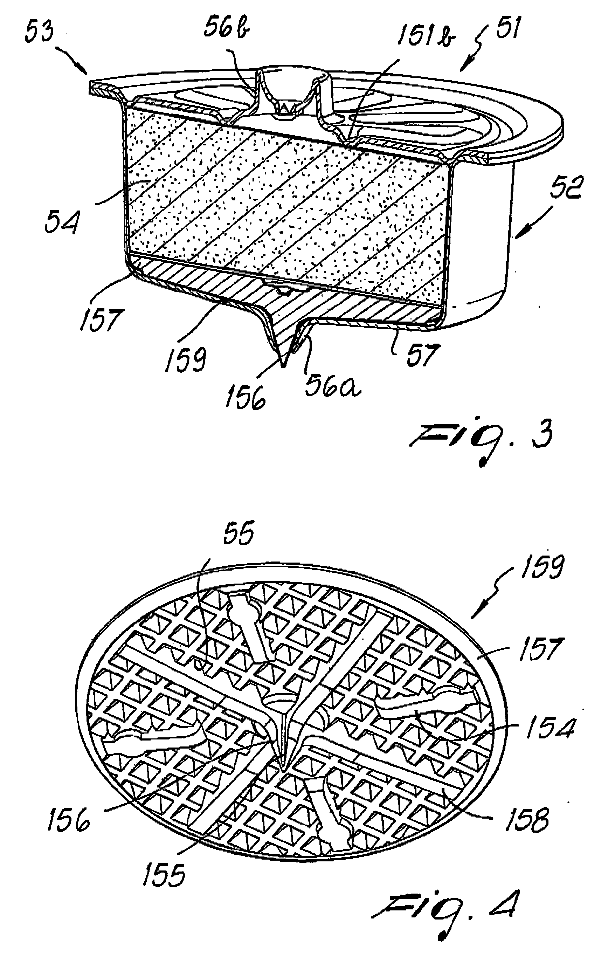

The tappet **159** is arranged inside the above mentioned conical hollow volume so that the tappet **159** normally holds on the cup port **56a** by means of the spike **156**, as shown in Figure 2.

In the preferred embodiment, the supporting portion **157** of the tappet is a disc extending throughout the bottom surface of the dose of ground coffee, which disc comprises a plurality of through holes **55** evenly distributed on its top surface. Furthermore, the bottom side of tappet **159** preferably comprises radial ribs **154, 158.**

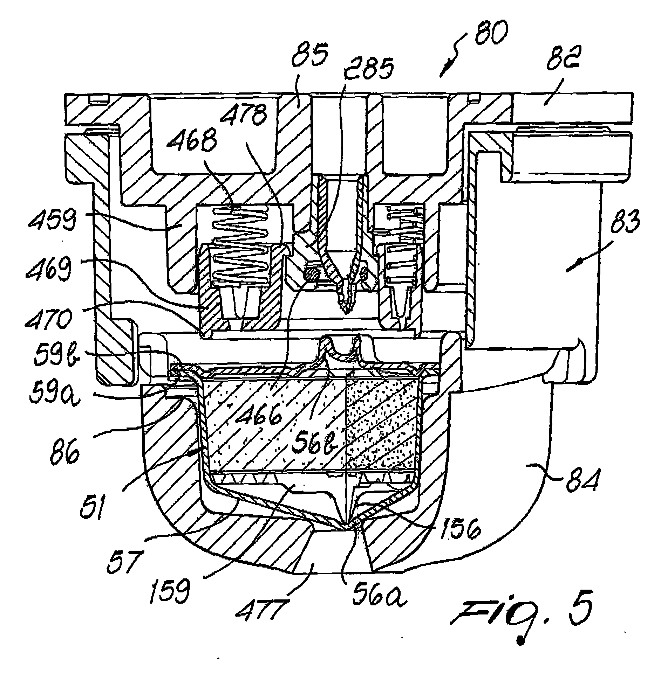

In the preferred embodiment depicted in Figure 4, the tappet **156** comprises surface grooves **155** running along a longitudinal direction from the tip end of the spike towards the bottom surface of the disc **157**, so that the spike **156** resembles the tip end of a Philips screwdriver. Obviously, this shape is only optional and other alternative shapes can be provided for the spike **156**, as long as these shapes allow the tappet to pierce the base **57** of the capsule.

At the beginning of the beverage extraction phase, when the filter holder is inserted into the bayonet holder, a mechanical pressure is applied to the base **57**, which tends to warp towards the tappet. As a consequence, the cup port **56a** is pierced by the spike **156** and an outlet for the extracted beverage is thus automatically created. A gap for conveying the extracted beverage to the outside is maintained by the ribs **154, 158** and by the grooves 155.

The lid port **56b** is instead pierced by the injection nozzle of the extraction machine and the injected water is spread over the top surface of the ground coffee by means of the surface shape of the lid portion **53**.

The capsule **51** is preferably manufactured by thermo forming, starting from a film or sheet of polylaminate thermoplastic or thermoset plastic materials, for instance a multilayer sheet comprising PE, PET and PVDC. With this manufacturing technique, the resulting capsule is very light and handy and uses a modest amount of packaging materials, too.

It is thus seen that capsule **51** integrates most of features of standard extraction chambers and, as well as the other cartridges according to the invention, it ensures an air-tight preservation of the ground coffee.

Moreover, during the extraction phase, a spout is automatically formed at the cup port **56a,** by means of which the extracted beverage is delivered directly to an external drinking cup or glass without contaminating the cartridge or filter holder.

According to a second aspect of the invention, an extraction assembly for application to standard espresso coffee machine or to another machine which can pump hot water or other infusion fluids under pressure for producing beverages will be now described in detail.

With reference to Figures 5-7, an extraction assembly **80** according to an embodiment of the invention comprises a support connectable to an espresso coffee machine, which is preferably composed of a connector member **82**, for connecting the extraction assembly to the water injection tube of the beverage extraction machine, and a bayonet holder **83**.

The connector member **82** has a base and a cylindrical sidewall raising from the base and ending with a flanged rim that serves for mounting the support on the extraction machine (not shown), for instance by using screws. The base of the connector member **82** comprises a protruding inlet port 85 connectable to the water outlet of the extraction machine and, on the opposite side of the base, a circular guiding wall **459.**

The bayonet holder **83** has a substantially cylindrical shape and comprises an upper open end into which the cylindrical sidewall of connector member **82** fits. Preferably, the bayonet holder **83** is fixed to the connector member **82** by means of the same screws used for mounting the connector member to the extraction machine. Obviously, the bayonet holder and the connector member may be reciprocally fixed in any other known way. For instance, the outer surface of the cylindrical sidewall of the connector member and the upper inner surface of the cylindrical sidewall of the bayonet holder may be threaded. Alternatively, the connector member and the bayonet holder may be built as a single piece.

Moreover, the bayonet holder 83 comprises a bottom open end on which guides of a known kind are provided for bayonet fitting with a cartridge holder **84**.

In order to deliver water inside the cartridge **51,** a nozzle **285** is secured to the inlet port **85** and protrudes towards the cartridge holder **84.**

Referring to Figure 7, the nozzle **285** is a substantially cylindrical hollow piece in which an inner axial cavity **459** is formed for receiving water from the water inlet **85**. A hollow needle or piercing member **458** is integrated with the nozzle **285** so that the cavity **459** extends as far as the needle. Advantageously, the needle **458** comprises radial through openings **456** for supplying water in a substantially radial direction.

An annular recess **455** is further provided in the nozzle **285**, in particular around the needle **458**, for housing an O-ring **466**, which acts as a means for providing a radial fluid-tight seal between the nozzle assembly and the inlet port **56b** of the cartridge **51** during the beverage extraction phase.

Advantageously, the extraction assembly **80** comprises a cartridge ejector **469** that is housed in the annular space defined by the wall **459** and the nozzle **285** and that is similar to the ejector **269**.

The ejector **469** preferably comprises a peripheral annular rib **470** on its bottom side, which is shaped so as to engage the peripheral bulge **151a** of the lid portion of cartridge **51** when the cartridge holder is secured to the bayonet holder.

The cartridge holder **84** has a substantially cylindrical body that is internally shaped so as to house capsule **51**. In particular, it comprises an inner sidewall that is shaped substantially complementary to the sidewall of the capsule and that ends with an annular shoulder **86** in an upper region and with an opening **477** in a bottom region of the capsule holder.

The base of the cartridge holder **84** has not the same slope of the base **57** of capsule **51**. Preferably, the base region of the capsule holder **84** slopes substantially parallel to the ribs **154** and **158** of the tappet **159**. Accordingly, in an initial condition in which the cartridge holder is not completely secured to the bayonet holder, the capsule **51** supports itself on the contour of the opening **477** only in correspondence of the region around the cup port **56a** and the flanges **59a, 59b** are in a raised position with respect to the annular shoulder **86** of the cartridge holder **84**.

As soon as the cartridge holder **84** is manually rotated for securing it to the bayonet holder **83,** the lid portion of the capsule **51** firstly abuts against the bottom surface of the ejector **469** and then abuts against the annular wall **459.** Accordingly, a pressure is applied to the base **57** that causes the spike **156** to pierce the cup port **56a** and the base **57** to buckle against the bottom side of tappet **159.**

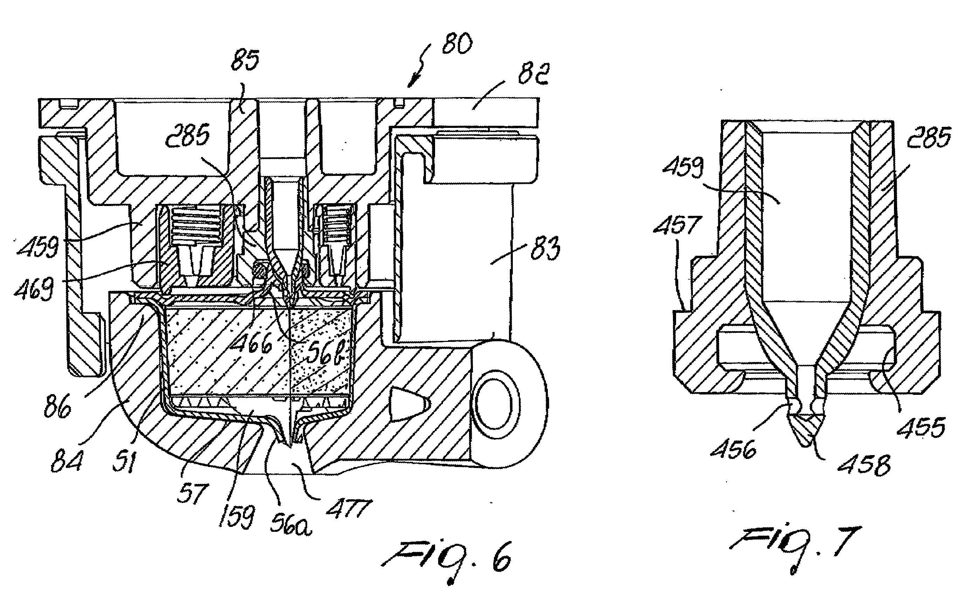

In the final position, that is to say in the position shown in Figure 6 in which the capsule holder **84** is fully secured to the bayonet holder **83** and the system is ready for the beverage extraction phase, the cup port **56a** is fully opened and the extracted beverage can be supplied directly in an external cup.

Figure 6 also shows that, in the beverage extraction position, the nozzle **285** has pierced the inlet port **56b** of capsule **51.** The M-like shape of the inlet port **56b** advantageously provides for an easy engagement with the needle portion of the nozzle **285.**

Advantageously, as soon as the capsule holder **84** is removed from the bayonet holder, the ejector **469** keeps cartridge **51** inside the cartridge holder **84.** In order to stop the ejector's travel when the cartridge holder is released, an annular projection **478** is provided around the internal surface of the toroidal body of the cartridge ejector, which stops against an abutment **57** of the nozzle body **285** when the ejector slides downwards.

The above extraction assemblies comprise an injection nozzle that is provided with a needle for breaking the plug or seal of the upper port of the cartridge and for accessing the internal volume of the cartridge. Moreover, the upper ports of the above cartridges are sized so as to be insertable into a corresponding female nozzle. However, it is possible to provide an opposite coupling between the injection nozzle and the upper port of a cartridge without departing from the scope of the present invention.

It has thus been shown that the present invention fulfils the proposed aim and objects. Clearly, several modifications to either the cartridges and the extraction assemblies according to the invention will be apparent to and can be readily made by the skilled in the art without departing from the scope of the present invention. Therefore, the scope of the claims shall not be limited by the illustrations or the preferred embodiments given in the description in the form of examples, but rather the claims shall encompass all of the features of patentable novelty that reside in the present invention, including all the features that would be treated as equivalents by the skilled in the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cartridge (51), particularly for espresso coffee machines, for extracting a beverage from a particulate substance (54) contained therein by means of water under pressure, the cartridge comprising:
a main body comprising a cup portion (52) and a lid portion (53), the cup portion comprising a base (57), a sidewall and a rim (59a) opposed to said base, the lid portion (53) being fixedly attached to said rim (59a) of the cup portion so as to define an internal volume of said cartridge,
the internal volume of said cartridge housing the particulate substance (54) comprised within filtering means for retaining said particulate substance and for percolating fluid substances therethrough,
said lid portion comprising a normally closed lid port (56b) defining a first passage for percolation fluid substances when it is opened,
**characterized in that** it comprises a tappet (159) arranged inside said internal volume so as to pierce said base (57) when a pressure is applied to said base towards said internal volume, thus opening a normally closed cup port (56a).

2. The cartridge according to claim 1, **characterized in that** the base (57) of said cup portion forms a substantially conical hollow volume with said particulate substance and said filtering means, said conical hollow volume housing said tappet (159), that holds on said normally closed cup port (56a).

3. The cartridge according to any one of the preceding claims, **characterized in that** said tappet (159) comprises a disc-like supporting portion (157) on which said particulate substance and said filtering means lean and a spike (156) protruding out from the supporting portion (157) on its side opposite to said particulate substance and said filtering means so that said tappet (159) holds on said cup port (56a) when it is closed and said spike (156) pierces said cup port when said pressure is applied.

4. The cartridge according to claim 3, **characterized in that** said supporting portion (157) comprises a plurality of through holes (55) evenly distributed on its top surface.

5. The cartridge according to claims 3 or 4, **characterized in that** the bottom side of said tappet comprises radial ribs (154, 158) protruding towards the base (57) of said cup portion, for keeping a gap between said base and said tappet should said base buckle due to said pressure.

6. The cartridge according to claim 1, **characterized in that** said base (57) comprises a plurality of ridges directly formed thereon and protruding towards the internal volume of the cartridge, so as to form a fine canalization for putting in a fluid communication said filtering means and said particulate substance with said cup port when the cup port (56a) is pierced.

7. The cartridge according to claim 1, **characterized in that** it comprises a disc of porous material arranged on the base (57) of said cup portion, so as to form a fine canalization for putting in a fluid communication said filtering means and said particulate substance with said cup port when the cup port is pierced.

8. The cartridge according to any one of the preceding claims, **characterized in that** said lid port (56b) protrudes from said lid portion (53) and has a substantially cylindrical shape.

9. The cartridge according to claim 8, **characterized in that** said lid port (56b) comprises fluid flow hurdles formed on its internal surface for breaking direct fluid flow passing through said cup port.

10. The cartridge according to any one of the preceding claims, **characterized in that** said lid portion (53) comprises a plurality of ridges directly formed on its inner side and protruding towards the internal volume of the cartridge, so as to form a plurality of small channels which put in a fluid communication said lid port with said filtering means and said particulate substance.

11. The cartridge according to claim 1, **characterized in that** said lid portion (53) comprises bulges (151b) directly protruding from its inner side towards the internal volume of the cartridge, so as to create a small gap between said lid portion and said filtering means.

12. The cartridge according to any one of the preceding claims, **characterized in that** said lid port (56b) comprises a rubber seal having a central pierceable portion and a peripheral thicker portion for providing a radial fluid-tight seal when cartridge is installed into a beverage extraction machine.

13. The cartridge according to any one of the preceding claims, **characterized in that** said main body has a substantially cylindrical shape with a conically protruding base (57).

14. The cartridge according to any one of the preceding claims, **characterized in that** it is made of any material selected from the following: thermoplastics, aluminum, rubber, polylaminate plastics, thermosetting compositions, and any combination thereof.

15. The cartridge according to any one of the preceding claims, **characterized in that** said particulate substance (54) is selected from the group comprising: ground coffee, roasted ground coffee, instant coffee, tea, powdered chocolate, powdered milk, instant based brews or soups.

16. The cartridge according to any one of the preceding claims, **characterized in that** the lid port or the cup port are sized so as to be wider than a water injection nozzle (458) of a beverage extraction machine, so that said lid port or said cup port can receive such nozzle therein during the beverage extraction phase.

17. An extraction assembly (80) to be mounted on beverage extraction machines, **characterized in that** it comprises:
a support connectable to a water outlet of a beverage extraction machine; and
a cartridge holder (84) securable to said support and holding a cartridge (51) for extracting a beverage from a particulate substance contained therein by means of water under pressure according to claim 1, the cartridge (51) comprising:
a main body comprising a cup portion (52) and a lid portion (53), the cup portion (52) comprising a base (57), a sidewall and a rim (59a) opposed to said base, the lid portion being fixedly attached to said rim (59a) of the cup portion so as to define an internal volume of said cartridge,
the internal volume of said cartridge (51) housing the particulate substance (54) comprised within filtering means for retaining said particulate substance and for percolating fluid substances therethrough,
said lid portion comprising a normally closed lid port (56b) defining a first passage for percolation fluid substances when it is opened,
a tappet (159) being arranged inside said internal volume so as to pierce said base (57) when a pressure is applied to said base towards said internal volume, thus opening a normally closed cup port (56a),
said cartridge holder (84) being internally shaped so as to apply said pressure to the base of said cartridge (51) towards said internal volume when the cartridge holder (84) is secured to said support.

## Patentansprüche

1. Kartusche (51), insbesondere für Espressokaffeemaschinen, zum Extrahieren eines Getränkes aus einer Pulversubstanz (54), die darin enthalten ist, mittels unter Druck stehenden Wassers, die folgendes aufweist:
eine Haupthülle mit einem Becherbereich (52) und einem Deckelbereich (53), wobei der Becherbereich eine Grundfläche (57), eine Seitenwand und einen Rand (59a) aufweist, der der Grundfläche gegenüberliegend angeordnet ist, und der Deckelbereich (53) fest an dem Rand (59a) des Becherbereiches befestigt ist, um ein inneres Volumen der Kartusche zu definieren,
das innere Volumen der Kartusche, das die Pulversubstanz (54) zusammen mit Filtern zum Zurückhalten der Pulversubstanz und zum Durchsickern von Fluidsubstanzen **dadurch** enthält,
den Deckelbereich mit einem normalerweise geschlossenen Deckelanschluss (56b), der einen ersten Durchgang zum Durchsickern von Fluidsubstanzen definiert, wenn er geöffnet ist,
**dadurch gekennzeichnet, dass** die Kartusche einen Stößel (159) aufweist, der innerhalb des Innenvolumens angeordnet ist, um die Grundfläche (57) zu durchstechen, wenn ein Druck auf die Grundfläche gegen das innere Volumen angelegt wird, wodurch ein normalerweise geschlossener Becheranschluss (56a) geöffnet wird.

2. Kartusche nach Anspruch 1, **dadurch gekennzeichnet, dass** die Grundfläche (57) des Becherbereiches ein im Wesentlichen konisches Hohlvolumen mit der Pulversubstanz und den Filtereinrichtungen bildet, das den Stößel (159) unterbringt, der an den normalerweise geschlossenen Becheranschluss (56a) gehalten ist.

3. Kartusche nach einem der vorstehenden Ansprüche, **dadurch gekennzeichnet, dass** der Stößel (159) einen scheibenartigen Trägerbereich (157), auf dem die Pulversubstanz und die Filtereinrichtungen liegen, und einen Dorn (156) aufweist, der von dem Trägerbereich (157) an dem der Pulversubstanz und der Filtereinrichtung gegenüberliegenden Seite hervorsteht, so dass der Stößel (159) an dem Becheranschluss (56a) anliegt, wenn er geschlossen ist, und der Dorn (156) den Becheranschluss durchstößt, wenn der Druck angelegt wird.

4. Kartusche nach Anspruch 3, **dadurch gekennzeichnet, dass** der Trägerbereich (157) eine Vielzahl von Durchgangslöchern (55) aufweist, die gleichmäßig an dessen Oberseite verteilt sind.

5. Kartusche nach Ansprüchen 3 oder 4, **dadurch gekennzeichnet, dass** die Unterseite des Stößels radiale Rippen (154, 158), die in Richtung der Grundfläche (57) des Becherbereiches hervorstehen, zum Aufrechterhalten eines Spaltes zwischen der Grundfläche und dem Stößel aufweist, sollte sich die Grundfläche aufgrund des Druckes verkrümmen.

6. Kartusche nach Anspruch 1, **dadurch gekennzeichnet, dass** die Grundfläche (57) eine Vielzahl an Leisten aufweist, die direkt darauf ausgebildet sind und in Richtung des Innenvolumens der Kartusche hervorstehen, um eine dünne Kanalisation zu bilden, um die Filtereinrichtungen und die Pulversubstanz mit dem Becheranschluss in eine Fluidkommunikation zu setzen, wenn der Becheranschluss (56a) durchstochen ist.

7. Kartusche nach Anspruch 1, **dadurch gekennzeichnet, dass** die Kartusche eine Scheibe aus porösem Material aufweist, die an der Grundfläche (57) des Becherbereiches angeordnet ist, um eine dünne Kanalisation zu bilden, um die Filtereinrichtung und die Pulversubstanz mit dem Becheranschluss in eine Fluidkommunikation zu setzen, wenn der Becheranschluss durchstochen ist.

8. Kartusche nach einem der vorstehenden Ansprüche, **dadurch gekennzeichnet, dass** der Deckelanschluss (56b) von dem Deckelbereich (53) hervorsteht und eine im Wesentlichen zylindrische Form aufweist.

9. Kartusche nach Anspruch 8, **dadurch gekennzeichnet, dass** der Deckelanschluss (56b) Fluidflusshürden aufweist, die an seiner Innenfläche zum Brechen des direkten Fluidflusses ausgebildet sind, der durch den Becheranschluss hindurchläuft.

10. Kartusche nach einem der vorstehenden Ansprüche, **dadurch gekennzeichnet, dass** der Deckelbereich (53) eine Vielzahl Leisten aufweist, die direkt an seiner Innenseite ausgebildet sind und in Richtung des Innenvolumens der Kartusche hervorstehen, um eine Vielzahl kleiner Kanäle zu bilden, die den Deckelanschluss mit der Filtereinrichtung und der Pulversubstanz in eine Fluidkommunikation setzen.

11. Kartusche nach Anspruch 1, **dadurch gekennzeichnet, dass** der Deckelbereich (53) Wülste (151 b) aufweist, die direkt an dessen Innenseite in Richtung des Innenvolumens der Kartusche hervorstehen, um einen kleinen Spalt zwischen dem Deckelbereich und den Filtereinrichtungen zu erzeugen.

12. Kartusche nach einem der vorstehenden Ansprüche, **dadurch gekennzeichnet**, das der Deckelanschluss (56b) eine Gummidichtung mit einem mittigen durchstechbaren Bereich und einen peripheren dickeren Bereich zum Bereitstellen einer radialen fluiddichten Dichtung aufweist, wenn die Kartusche in einer Getränkeextraktionsmaschine eingesetzt ist.

13. Kartusche nach einem der vorstehenden Ansprüche, **dadurch gekennzeichnet, dass** die Haupthülle eine im Wesentlichen zylindrische Form mit einer konisch vorstehenden Grundfläche (57) aufweist.

14. Kartusche nach einem der vorstehenden Ansprüche, **dadurch gekennzeichnet, dass** sie aus irgendeinem der nachfolgenden Materialien hergestellt ist: thermoplastisches Material, Aluminium, Gummi, Polylaminatkunststoffe, wärmeverformbare Zusammensetzung und irgendeine Kombination davon.

15. Kartusche nach einem der vorstehenden Ansprüche, **dadurch gekennzeichnet, dass** die Pulversubstanz (54) aus folgender Gruppe ausgewählt ist: gemahlener Kaffee, gerösteter gemahlener Kaffee, löslicher Kaffee, Tee, Schokoladenpulver, Milchpulver, lösliche Gebräue oder Suppen.

16. Kartusche nach einem der vorstehenden Ansprüche, **dadurch gekennzeichnet, dass** der Deckelanschluss oder der Becheranschluss derart dimensioniert sind, dass sie weiter als eine Wasserinjektionsnadel (458) einer Getränkeextraktionsmaschine sind, so dass der Deckelanschluss oder der Becheranschluss eine derartige Nadel darin während der Getränkeextraktionsphase aufnehmen können.

17. Extraktionsanordnung (80), die an einer Getränkeextraktionsmaschine zu befestigen ist, **gekennzeichnet durch** Folgendes:
einen an einem Wasserauslass einer Getränkeextraktionsmaschine anschließbaren Träger; und
einen Kartuschenhalter (84), der an dem Träger sicherbar ist und eine Kartusche (51) zum Extrahieren eines Getränkes aus einer Pulversubstanz hält, die darin enthalten ist, mittels unter Druck stehendem Wasser gemäß Anspruch 1, wobei die Kartusche (51) folgendes aufweist:
eine Haupthülle mit einem Becherbereich (52) und einem Deckelbereich (53), wobei der Becherbereich eine Grundfläche (57), eine Seitenwand und einen Rand (59a) aufweist, der der Grundfläche gegenüberliegend angeordnet ist, und der Deckelbereich (53) fest an dem Rand (59a) des Becherbereiches befestigt ist, um ein inneres Volumen der Kartusche zu definieren,
das innere Volumen der Kartusche (51), das die Pulversubstanz (54) zusammen mit Filtern zum Zurückhalten der Pulversubstanz und zum Durchsickern von Fluidsubstanzen **dadurch** enthält,
den Deckelbereich mit einem normalerweise geschlossenen Deckelanschluss (56b), der einen ersten Durchgang zum Durchsickern von Fluidsubstanzen definiert, wenn er geöffnet ist,
den Stößel (159), der innerhalb des Innenvolumens angeordnet ist, um die Grundfläche (57) zu durchstechen, wenn ein Druck auf die Grundfläche gegen das innere Volumen angelegt wird, wodurch ein normalenrweise geschlossener Becheranschluss (56a) geöffnet wird,
den Kartuschenhalter (84), der im Inneren derart geformt ist, dass der Druck an der Grundfläche der Kartusche (51) in Richtung des Innenvolumens anliegt, wenn der Kartuschenhalter (84) an dem Träger gesichert ist.

## Revendications

1. Cartouche (51), en particulier pour machines à café expresso, pour l'extraction d'une boisson à partir d'une substance particulaire (54) contenue dans celle-ci au moyen d'eau sous pression, la cartouche comprenant :
un corps principal, comprenant une partie de godet (52) et une partie de couvercle (53), la partie de godet (52) comprenant une base (57), une paroi latérale et un bord (59a) opposé à ladite base, la partie de couvercle (53) étant attachée fixement audit bord (59a) de la partie de godet de façon à définir un volume interne de ladite cartouche,
le volume interne de ladite cartouche logeant la substance particulaire (54) comprise à l'intérieur de moyens de filtration pour retenir la substance particulaire et pour percoler des substances fluides à travers ceux-ci,
ladite partie de couvercle comprenant une ouverture de couvercle (56b) normalement fermée définissant un premier passage pour des substances fluides de percolation lorsqu'elle est ouverte,
**caractérisée en ce qu'**elle comprend un poussoir (159) agencé à l'intérieur dudit volume interne de façon à percer ladite base (57) lorsqu'une pression est appliquée à ladite base vers ledit volume interne, ouvrant ainsi une ouverture de godet normalement fermée (56a).

2. Cartouche selon la revendication 1, **caractérisée en ce que** la base (57) de ladite partie de godet forme un volume creux substantiellement conique avec ladite substance particulaire et lesdits moyens de filtration, ledit volume creux conique logeant ledit poussoir (159) qui se tient sur ladite ouverture de godet (56a) normalement fermée.

3. Cartouche selon l'une quelconque des revendications précédentes, **caractérisée en ce que** ledit poussoir (159) comprend une partie de support de type disque (157) sur laquelle s'appuient ladite substance particulaire et lesdits moyens de filtration et une pointe (156) faisant saillie à partir de la partie de support (157) sur son côté opposé à ladite substance particulaire et auxdits moyens de filtration, de sorte que ledit poussoir (159) se tient sur ladite ouverture de godet (56a) lorsqu'elle est fermée et que ladite pointe (156) perce ladite ouverture de godet lorsque ladite pression est appliquée.

4. Cartouche selon la revendication 3, **caractérisée en ce que** ladite partie de support (157) comprend une pluralité de trous traversants (55) répartis de façon uniforme sur sa surface supérieure.

5. Cartouche selon la revendication 3 ou 4, **caractérisée en ce que** le côté inférieur dudit poussoir comprend des nervures radiales (154, 158) faisant saillie vers la base (57) de ladite partie de godet, pour conserver un espace entre ladite base et ledit poussoir au cas où ladite base se voile sous l'effet de ladite pression.

6. Cartouche selon la revendication 1, **caractérisée en ce que** ladite base (57) comprend une pluralité de saillies formées directement sur celle-ci et faisant saillie vers le volume interne de la cartouche, de façon à former une fine canalisation pour mettre en communication de fluide lesdits moyens de filtration et ladite substance particulaire avec ladite ouverture de godet lorsque ladite ouverture de godet (56a) est percée.

7. Cartouche selon la revendication 1, **caractérisée en ce qu'**elle comprend un disque de matériau poreux agencé sur la base (57) de ladite partie de godet, de façon à former une fine canalisation pour mettre en communication de fluide lesdits moyens de filtration et ladite substance particulaire avec ladite ouverture de godet lorsque l'ouverture de godet est percée.

8. Cartouche selon l'une quelconque des revendications précédentes, **caractérisée en ce que** ladite ouverture de couvercle (56b) fait saillie à partir de ladite partie de couvercle (53) et présente une forme substantiellement cylindrique.

9. Cartouche selon la revendication 8, **caractérisée en ce que** ladite ouverture de couvercle (56b) comprend des chicanes d'écoulement de fluide formées sur sa surface interne pour briser l'écoulement de fluide direct à travers ladite ouverture de godet.

10. Cartouche selon l'une quelconque des revendications précédentes, **caractérisée en ce que** ladite partie de couvercle (53) comprend une pluralité de saillies formées directement sur son côté intérieur et faisant saillie vers le volume interne de la cartouche, de façon à former une pluralité de petits canaux qui mettent en communication de fluide ladite ouverture de couvercle avec lesdits moyens de filtration et ladite substance particulaire.

11. Cartouche selon la revendication 1, **caractérisée en ce que** ladite partie de couvercle (53) comprend des bombements (151b) faisant saillie directement à partir de son côté intérieur vers le volume interne de la cartouche, de façon à créer un petit espace entre ladite partie de couvercle et lesdits moyens de filtration.

12. Cartouche selon l'une quelconque des revendications précédentes, **caractérisée en ce que** ladite ouverture de couvercle (56b) comprend un joint en caoutchouc comportant une partie centrale à percer et une partie périphérique plus épaisse pour fournir un joint radial étanche au fluide lorsque la cartouche est installée dans une machine d'extraction de boisson.

13. Cartouche selon l'une quelconque des revendications précédentes, **caractérisée en ce que** ledit corps principal présente une forme substantiellement cylindrique avec une base (57) faisant saillie de façon conique.

14. Cartouche selon l'une quelconque des revendications précédentes, **caractérisée en ce qu'**elle est réalisée à partir d'un matériau quelconque sélectionné parmi les suivants : les thermoplastiques, l'aluminium, le caoutchouc, les plastiques polylaminés, les compositions thermodurcissables, et toute combinaison de ceux-ci.

15. Cartouche selon l'une quelconque des revendications précédentes, **caractérisée en ce que** ladite substance particulaire (54) est sélectionnée dans le groupe comprenant : du café moulu, du café moulu torréfié, du café instantané, du thé, du chocolat en poudre, du lait en poudre, des infusions ou soupes à base d'instantané.

16. Cartouche selon l'une quelconque des revendications précédentes, **caractérisée en ce que** l'ouverture de couvercle ou l'ouverture de godet est dimensionnée de façon à être plus large qu'une buse d'injection d'eau (458) d'une machine d'extraction de boisson, de sorte que ladite ouverture de couvercle ou ladite ouverture de godet peut recevoir une telle buse dans celle-ci pendant la phase d'extraction de boisson.

17. Ensemble d'extraction (80) à monter sur des machines d'extraction de boisson, **caractérisé en ce qu'**il comprend :
un support pouvant être connecté à une sortie d'eau d'une machine d'extraction de boisson ; et
un dispositif de retenue de cartouche (84) pouvant être fixé audit support et retenant une cartouche (51) pour l'extraction d'une boisson à partir d'une substance particulaire contenue dans celle-ci au moyen d'eau sous pression selon la revendication 1, la cartouche (51) comprenant :
un corps principal, comprenant une partie de godet (52) et une partie de couvercle (53), la partie de godet (52) comprenant une base (57), une paroi latérale et un bord (59a) opposé à ladite base, la partie de couvercle (53) étant attachée fixement audit bord (59a) de la partie de godet de façon à définir un volume interne de ladite cartouche,
le volume interne de ladite cartouche (51) logeant la substance particulaire (54) comprise à l'intérieur de moyens de filtration pour retenir ladite substance particulaire et pour filtrer des substances fluides à travers ceux-ci,
ladite partie de couvercle comprenant une ouverture de couvercle (56b) normalement fermée définissant un premier passage pour des substances fluides de percolation lorsqu'elle est ouverte,
un poussoir (159) étant agencé à l'intérieur dudit volume interne de façon à percer ladite base (57) lorsqu'une pression est appliquée à ladite base vers ledit volume interne, ouvrant ainsi une ouverture de godet normalement fermée (56a),
ledit dispositif de retenue de cartouche (84) étant formé en interne de façon à appliquer ladite pression à la base de ladite cartouche (51) vers ledit volume interne lorsque le dispositif de retenue de cartouche (84) est fixé audit support.
